# EUROPÄISCHE PATENTANMELDUNG

(11) **EP 2 201 909 A2**
(43) Veröffentlichungstag der Anmeldung: **30.06.2010**
(21) Anmeldenummer: 09015979.9
(22) Anmeldetag: 23.12.2009
(51) Int. Cl.: A61C 13/20, A61C 13/08

(54) **Pressmuffel und zu deren Herstellung dienendes Muffelsystem**

(30) Priorität: 24.12.2008 DE 202008017072 U
(71) Anmelder: Zubler Gerätebau GmbH, 89081 Ulm-Jungingen (DE)
(72) Erfinder: Zubler, Kurt, 89233 Neu-Ulm (DE)
(74) Vertreter: Fiener, Josef

(57) **Zusammenfassung**

Die Herstellung weitspänniger Dentalobjekte, insbesondere auf Keramikbasis wird eine Pressmuffel mit zwei Hauptabschnitten (21, 22) vorgeschlagen, wobei einer der Hauptabschnitte (21, 22) eine Umfangserweiterung (18) aufweist, die gemäß der Form des eingebetteten Dentalobjektes, insbesondere mit bogenförmiger Grundform, ausgebildet ist. Bevorzugt ist die Umfangserweiterung (18) als tangential an der Pressmuffel herangeführte Vorsprünge (32) ausbildet. Zudem wird ein Muffelsystem zur Herstellung einer derartigen Pressmuffel beschrieben.

## Beschreibung

Die Erfindung betrifft eine Pressmuffel mit den oberbegrifflichen Merkmalen des Anspruchs 1 sowie ein Muffelsystem mit den oberbegrifflichen Merkmalen des Anspruchs 6.

Bei der Herstellung von zahntechnischer Presskeramik, wie beispielsweise von Brücken, Kronen, Veneers und Inlays, wird zunächst ein Wachsmodell des Dentalobjektes hergestellt, das dann in eine Muffel eingebettet wird. Die Muffel wird hergestellt, indem Muffelbasis, Muffellehre bzw. -deckel und ein manschettenartiger Muffelring zur Muffelform zusammengesetzt werden. Auf der Muffelbasis wird das Wachsmodell mit Wachs fixiert. Anschließend wird Einbettmasse in die vorbereitete Muffelform eingegossen. Nach dem Aushärten der Einbettmasse wird die Muffelform entfernt und die ausgeformte Muffel ggf. nachbearbeitet. Vor dem Pressvorgang wird zunächst das Wachs ausgeschmolzen und in den so entstehenden Hohlraum, der die Form des zukünftigen zahntechnischen Objektes darstellt, Keramikmasse eingebracht. Hierfür wird nach dem Ausschmelzen des Wachses ein Keramikpellet der gewünschten Farbe und der erforderlichen Größe in den Presskanal eingeführt und mitsamt dem Pressstempel in die Brennkammer des Pressofens eingeführt. Der Muffel wird Wärme so lange zugeführt, bis mit Erreichen der Presstemperatur die Keramikmasse in einen fließfähigen Zustand übergeht. Nun erfolgt der Pressvorgang, bei dem die Keramikmasse mit Hilfe des Pressstempels eingedrückt wird.

Probleme mit dem vorgenannten Verfahren treten dann auf, wenn größere Objekte, wie beispielsweise Brücken mit mehreren Zähnen oder komplexe Zahnersatzkomponenten oder Zahnkränze hergestellt werden sollen. Um das Problem zu lösen, bestand bisher nur die Möglichkeit, die Objekte in herkömmlichen Pressmuffeln mit größerem Durchmesser herzustellen. Hierbei erweist es sich jedoch als nachteilig, dass bei vergleichbarem Volumen wesentlich mehr Einbettmaterial als bei kompakten Dentalobjekten eingesetzt werden muss. Aufgrund des großen Gesamtdurchmessers der Muffel verlangt diese zudem erheblich längere Aufheiz- und Brennphasen. Bedingt durch die ungleichmäßigen Abstände zwischen dem eingebetteten Objekt und der Muffelwand erfolgt eine Durchwärmung des Objektes nur unregelmäßig und kann zudem nur ungenügend kontrolliert werden. Dies kann zu Spannungen im Material führen, die in Rissen oder Brüchen der Dentalobjekte resultieren können.

Aufgabe der vorliegenden Erfindung ist es daher, eine Pressmuffel sowie ein für ihre Herstellung geeignetes Muffelsystem zur Verfügung zu stellen, das die oben genannten Nachteile überwindet und die Herstellung weitspänniger oder großflächiger Dentalobjekte in einem Arbeitsgang erlaubt. Des weiteren soll eine Pressmuffel zur Verfügung gestellt werden, die eine verbesserte Temperaturführung am Dentalobjekt während des Verpressvorganges erlaubt, sodass sich dieses gleichmäßig erwärmen und nach dem Pressvorgang abkühlen kann.

Diese Aufgabe wird gelöst durch eine Pressmuffel gemäß Anspruch 1 sowie ein Muffelsystem gemäß Anspruch 6. Vorteilhafte Weiterbildungen der Erfindung sind Gegenstand der abhängigen Ansprüche.

Die Erfindung stellt eine Pressmuffel mit wenigstens einem eingebetteten Dentalobjekt auf Basis keramischer Werkstoffe zur Verfügung, die in Längsrichtung (= Presskanalrichtung) wenigstens zwei Abschnitte umfasst, von denen einer gegenüber dem zweiten Abschnitt eine Umfangserweiterung aufweist. Der erste Abschnitt bezieht sich hierbei auf den Bereich der Muffel, der das Dentalobjekt aufnimmt, während der zweite Abschnitt zur Aufnahme des Pressstempels bestimmt ist. Im Bereich der Umfangserweiterung ist das Dentalobjekt im Innern der Pressmuffel angeordnet. Aufgrund der Ausgestaltung der Pressmuffel weist diese nur partiell ein vergrößertes Volumen auf, bleibt im übrigen jedoch hinsichtlich der Stand- bzw. Grundfläche und der Muffelhöhe innerhalb der Maße herkömmlicher Muffeln. Daraus ergibt sich, dass die gleiche Menge an Einbettmasse verwendet werden kann und dass die Ofenparameter während des Aufheiz-, Brenn- und Pressvorganges denen zylindrischer Muffeln weitgehend gleichen. Zudem ist bei der erfindungsgemäßen Pressmuffel vorgesehen, dass die Umfangserweiterung gemäß den wesentlichen Formmerkmalen des eingebetteten Dentalobjektes ausgebildet ist. Diese Ausgestaltung der Pressmuffel berücksichtigt somit die Form des herzustellenden Dentalobjektes. Bei diesem kann es sich beispielsweise um einen Zahnkranz oder eine aus mehreren Zähnen aufgebaute Brücke handeln. Derartige Objekte weisen eine bogenförmige Grundform auf und lassen sich daher in herkömmliche, runde Muffeln nur schwierig einpassen. Durch die jeweils an die Grundform angelehnte Ausgestaltung der Pressmuffel kann nun jedoch optimal auf verschiedenste Formen der herzustellenden Dentalobjekte reagiert werden. Die Muffel wird daher im Dentalofen besser durchwärmt, wodurch wegen des gleichmäßigeren Abstands des eingebetteten Objekts zur Außenwand eine verbesserte Temperaturführung möglich ist. Da lediglich im Bereich des eingebetteten Dentalobjektes eine Erweiterung der Pressmuffel vorgesehen ist, wird vermieden, dass eine für die übrigen Ausmaße des Objektes zu groß dimensionierte Pressmuffel verwendet werden muss, die einen erhöhten Bedarf an Einbettmasse und eine wesentliche längere Durchwärmzeit aufweist.

Als besonders günstig wird angesehen, wenn die Umfangserweiterung als tangential an der Pressmuffel herangeführte Vorsprünge ausgebildet ist. Diese Ausführung der Pressmuffel bietet sich vor allem dann an, wenn in Draufsicht halbkreisförmig oder halbelliptisch geformte Objekte hergestellt werden sollen. Somit überragen lediglich die Enden des Dentalobjektes die Außenmaße des durchmesserkleineren Abschnitts, während der überwiegende Teil des Dentalobjektes innerhalb des Muffelzylinders angeordnet ist. Die Enden des Dentalobjektes sind dabei in die entsprechenden Vorsprünge eingebettet, sodass weiterhin die insgesamt kleinere Einbettmasse verwendet werden kann. Günstig für die Temperaturführung und für das Ausbetten der Muffel aus dem Muffelformer erweist es sich, wenn die Vorsprünge der Umfangserweiterung abgerundete Enden aufweisen.

Als vorteilhaft wird angesehen, wenn der zweite (in Pressstellung obere) Abschnitt der Pressmuffel bis zum Ende konisch zulaufend ausgebildet ist. Die konische Ausführung des zweiten Abschnittes begünstigt zum einen die Durchwärmung der Muffel im Pressvorgang, zum anderen kann dadurch Material d.h. Einbettmasse eingespart werden. Dies dient dann beispielsweise dazu, den umfangserweiterten Bereich der Muffel zu bilden, so dass hier die gleiche Menge an Einbettmasse, die für die Herstellung einer vollzylindrischen Pressmuffel ausreichen würde, genügt, um die Pressmuffel zu bilden. Neben einer konischen Ausbildung des zweiten Abschnittes der Pressmuffel ist es auch möglich, dass beide Hauptabschnitte der Pressmuffel als Kegelstumpf ausgebildet sind. Hierdurch verfügt die Pressmuffel über eine durchgehende Gesamt-Oberfläche, sodass diese leichter aus der Muffelform bzw. den Muffelformer ausgeformt werden kann, zumal der obere, hier verjüngte Abschnitt für die Stabilität der Muffel nicht entscheidend ist. Da die Druckkraft der geschmolzenen Keramik insbesondere in unteren bis mittleren Bereich wirkt kann somit das obere Ende, an dem der Pressstempel eingeführt wird, verjüngt werden.

Da in der erfindungsgemäßen Pressmuffel größere Dentalobjekte hergestellt werden können, sollte auch eine Möglichkeit geschaffen werden, entsprechend mehr an keramischem Rohmaterial in die Muffel einzubringen. Um dies zu gewährleisten, wird der Durchmesser des Presskanals deutlich größer gewählt als die Durchmesser üblicher Presskanäle herkömmlicher Pressmuffelsysteme. Dadurch kann mehr Keramikmaterial in die Pressmuffel eingebracht werden, ohne dass die begrenzte Höhe der für handelsübliche Keramiköfen geeigneten Muffelsysteme überschritten wird. Gleichzeitig ist hierbei der Anstiftweg vom Rand des Presskanals bis zu den Objekten sehr kurz. Dies führt zu einer geringeren Abfallmenge durch die Anstiftkanäle. Bei guter Ermittlung des erforderlichen Keramikgewichts ist es möglich, das überschüssige Material extrem gering zu halten, da der Pressstempel bis nahe an den Boden des Presskanals herangedrückt werden kann.

Als günstig wird angesehen, wenn der Presskanal ein kreisringförmiges oder ein nicht verdrehbares Profil aufweist, z. B. einen ovalen Querschnitt. Durch die kreisringförmige Ausgestaltung des Presskanals kann eine gleichmäßige Befüllung der Pressmuffel erreicht werden, auch wenn die Objekte außermittig in der Pressmuffel eingebettet sind. Die Ausgestaltung des Presskanals mit einem nicht verdrehbaren Profil, beispielsweise als elliptischer Schacht, erlaubt die Befüllung mit besonders großen Mengen an Ausgangsmaterial. Um die erfindungsgemäße Pressmuffel in einem Dentalofen verwenden zu können, der auf standardisierte, zylindrische Pressmuffeln ausgelegt ist, wird es als günstig angesehen, wenn die Pressmuffel am unteren Ende eine kreisrunde Standfläche aufweist. Mit dieser Standfläche kann die Pressmuffel auf einem Standard-Pressteller eines herkömmlichen Dentalofens aufgesetzt werden.

Zur Bildung der erfindungsgemäßen Pressmuffel mit wenigstens zwei Abschnitten, wie oben beschrieben, wird ein Muffelsystem zur Verfügung gestellt. Dieses Muffelsystem umfasst eine Muffelbasis mit wenigstens einer Anwachsfläche für ein dentaltechnisches Wachsobjekt, einen Muffeldeckel und wenigstens einen zwischen der Muffelbasis und dem Muffeldeckel angeordneten Muffelring, der die Negativform eines eine Umfangserweiterung aufweisenden (ersten) Abschnitts der Pressmuffel aufweist. Dadurch ist es möglich unter Beibehaltung der übrigen Systemkomponenten auf die jeweilige Form des herzustellenden Dentalobjekts abgestimmte Muffelringe zu verwenden. Zudem ist hierbei die Negativform, die im Inneren des Muffelrings abgebildet ist, gemäß den wesentlichen Formmerkmalen des eingebetteten Dentalobjektes ausgebildet, insbesondere die Umfangserweiterung an eine bogenförmige Grundform angepasst.

Durch die bevorzugte konische Ausgestaltung muss beim Herstellen der Pressmuffel weniger Material in die Form eingebracht werden. Daneben kann die Muffel nach Aushärten der Einbettmasse zudem leichter aus der Form entnommen werden. Bevorzugt ist im Muffeldeckel die Negativform einer Standfläche, die nach Fertigstellung am unteren Ende der Pressmuffel angeordnet ist, vorgesehen. Um diese Standfläche zu bilden, wird in den Muffeldeckel eine Stufe zur Reduzierung des Durchmessers eingebracht, so dass sich hier nach dem Ausgießen mit der Einbettmasse eine kreisförmige Standfläche abbildet. Mit dieser Standfläche kann die Pressmuffel auf einem Standardpressteller aufgesetzt werden, der meist einer zylindrischen Muffel entspricht.

Die Muffelbasis und der Muffelring (Manschette) weisen zum lagerichtigen Aufstecken bevorzugt eine sog. Indexierung auf, z. B. in Form einer kleinen Rastnase und einer zugehörigen Nut, so dass die beiden Bauteile nur in einer bestimmten Position zusammengefügt werden können. Zum besseren Wärmeübergang kann die Innenseite des Muffelrings zudem mit Längsrillen profiliert sein.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen Zeichnungen. Es zeigt:
Fig. 1 eine Ausführungsform des erfindungsgemäßen Muffelsystems in Schnittdarstellung,
Fig. 2 eine Ausführungsform der erfindungsgemäßen Pressmuffel in Seitenansicht,
Fig. 3 eine bevorzugte Ausführungsform der Pressmuffel in Draufsicht,
Fig. 4 eine Ausführungsform des Muffelsystems im Perspektiv-Halbschnitt,
Fig. 5 eine Fotografie eines Muffelsystems (Negativform) im Bereich der Vorsprünge, und
Fig. 6 eine fertiggestellte Pressmuffel mit "ohrenartigen" Vorsprüngen.

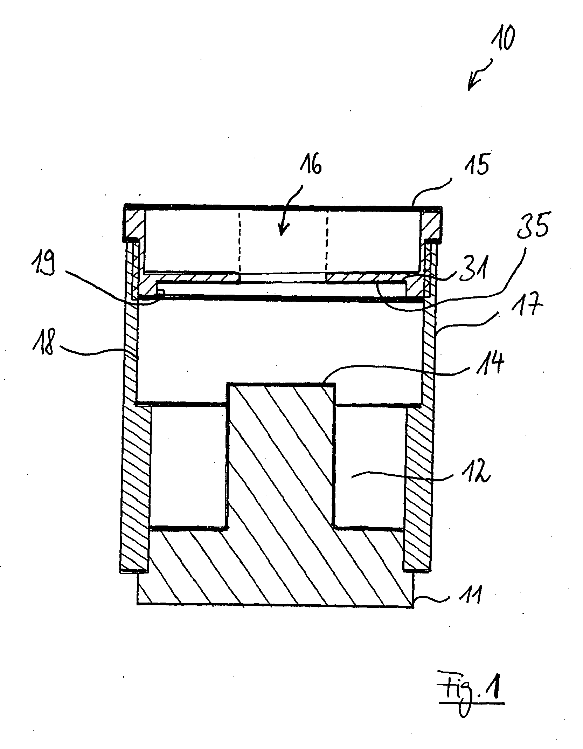

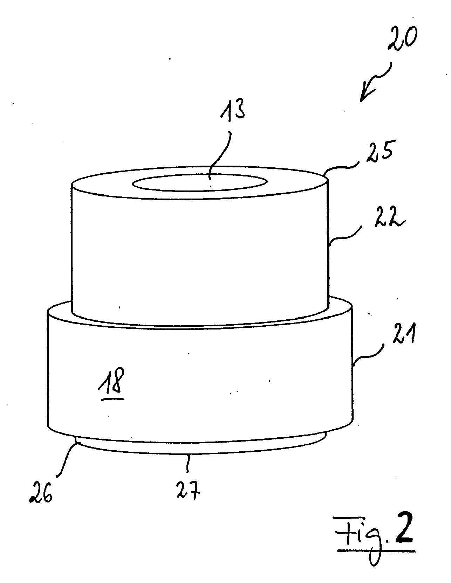

In Fig. 1 wird eine bevorzugte Ausführungsform des erfindungsgemäßen Muffelsystems 10 dargestellt. Das Muffelsystem 10 ist hierbei bereits zusammengesetzt, um mit einer Einbettmasse befüllt zu werden. Das Muffelsystem 10 weist eine Muffelbasis 11 auf, die gleichzeitig eine Verlängerung 12 umfasst, um nach Entnahme und Ausformung der Pressmuffel 20 aus dem Muffelsystem 10 den Presskanal 13 (vgl. Fig. 2) zu bilden. Ein Muffeldeckel 15 schließt das Muffelsystem 10 ab und dient als Negativform für den späteren Boden der fertigen Pressmuffel 20 (dann um 180° gedreht bzw. auf den Kopf gestellt). Die dem Muffeldeckel 15 zugewandte Fläche 14 der Verlängerung 12 bildet die Anwachsfläche für ein dentaltechnisches Wachsobjekt (nicht dargestellt). Dieses wird vor dem Einpressen der Keramikmasse aus der Pressmuffel 20 ausgeschmolzen. Der Muffeldeckel 15 verfügt über eine Öffnung 16, über die das Einbettmaterial in das Muffelsystem 10 eingefüllt wird. Zwischen dem Muffeldeckel 15 und der Muffelbasis 11 erstreckt sich der manschettenartige Muffel- oder Mantelring 17, der die Form und Länge der fertigen Pressmuffel 20 (vgl. Fig. 2) vorgibt. Im Ausführungsbeispiel der Fig. 1 weist der Muffelring 17 die Negativform einer Umfangserweiterung 18 auf, in der besonders weitspännige oder auch größere Dentalobjekte 30 eingebettet werden.

Der Muffeldeckel 15 verfügt auf seiner Innenseite 35 über eine Umfangsreduzierung 19. Durch diese Umfangsreduzierung 19 wird die Außenwand 31, die im Bereich des eingebetteten Dentalobjektes 30 größer als der Durchmesser herkömmlicher zylindrischer Pressmuffeln 20 ist, auf das Standarddurchmessermaß herkömmlicher Pressmuffeln 20 reduziert, so dass diese Sondermuffel, die mit dem Muffelsystem 10 der Fig. 1 hergestellt wird, auch in Standardbrennöfen verwendet werden kann.

Fig. 2 zeigt eine bevorzugte Ausführungsform einer Pressmuffel 20, die mit dem vorstehend beschriebenen Muffelsystem 10 hergestellt wurde. Die Pressmuffel 20 weist dabei im Wesentlichen zwei Hauptabschnitte 21, 22 auf. Der erste (nach Umdrehen nun untere) Hauptabschnitt 21 der Pressmuffel 20 ist dabei gegenüber dem Durchmesser des zweiten (oberen) Hauptabschnittes 22 erweitert. Aufgrund des erweiterten Hauptabschnittes 21 bietet die in Fig. 2 dargestellte Pressmuffel 20 die Möglichkeit größere und u. U. weitspännigere Dentalobjekte 30 in einem herkömmlichen Dentalofen herzustellen. Der Anwender der gezeigten Pressmuffel 20 muss für die Herstellung größerer Dentalobjekte 30 somit nicht auf eine Pressmuffel 20 mit durchgehend größerem Durchmesser und damit verlängerten Heiz- und Abkühlzeiten zurückgreifen. Der zweite, durchmesserkleinere Hauptabschnitt 22 weist im wesentlichen den Durchmesser herkömmlicher Pressmuffeln 20 auf. Im Vergleich zu herkömmlichen Pressmuffeln verfügt die Pressmuffel 20 der Fig. 1 zudem über einen durchmesservergrößerten Presskanals 13. Zur Herstellung größerer Dentalobjekte 30 kann darüber mehr Keramikmaterial in die Pressmuffel 20 eingebracht werden. Die maximal einbringbare Keramikmenge wird meist durch die begrenzte Höhe der Muffelsysteme 10, die durch handelsübliche Keramiköfen vorgegeben wird, begrenzt. Hier kann durch die Aufweitung des Presskanals 13 wesentlich mehr Keramikmaterial in die Pressmuffel 20 eingefüllt werden, ohne die Gesamthöhe der Pressmuffel 20 verändern zu müssen.

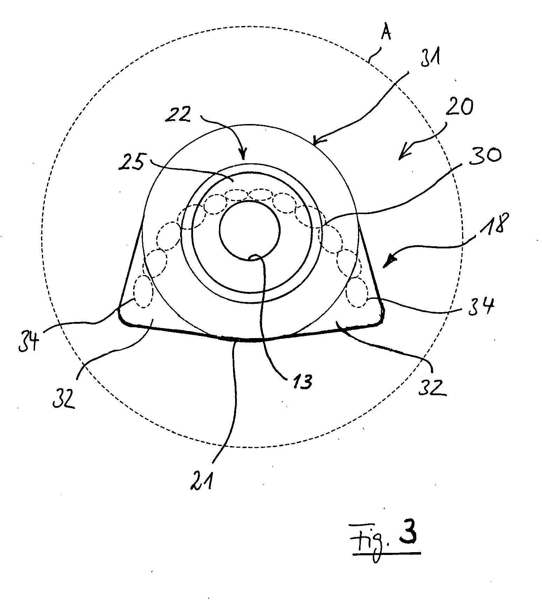

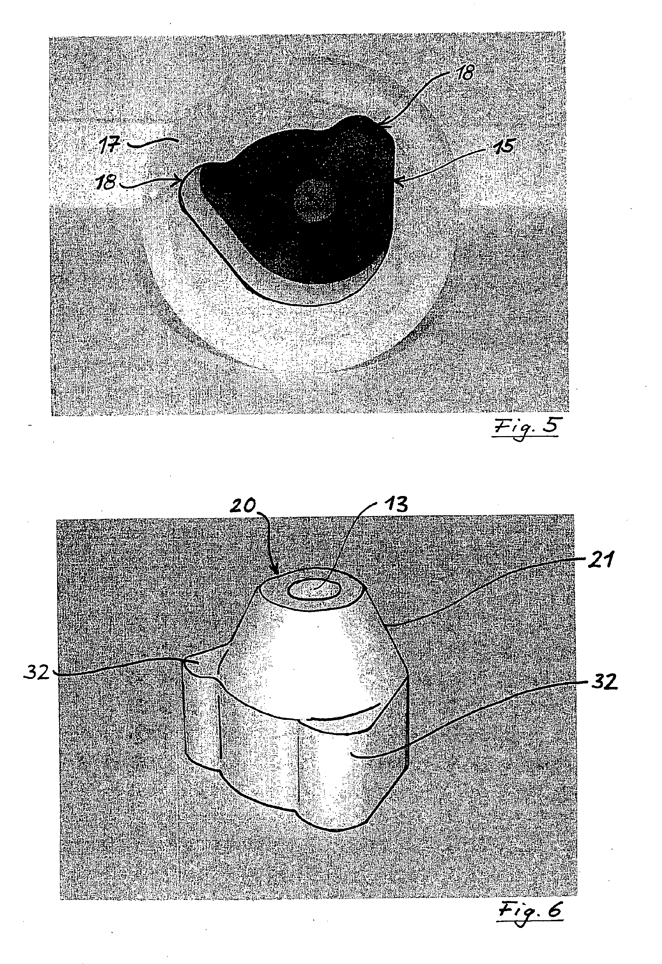

Die Umfangserweiterung 18 der Pressmuffel 20 ist je nach zu realisierendem Dentalobjekt 30 an die wesentlichen Formmerkmale des jeweiligen Dentalobjektes 30 angepasst. Bevorzugt ist in diesem Zusammenhang beispielsweise die Ausführung der Umfangserweiterung 18 mit einer bogenförmigen Grundform. Darüber hinaus kann die Umfangserweiterung 18 auch als tangential an die Pressmuffel 20 herangeführte Vorsprünge 32 ausgebildet sein, die im Interesse einer vereinfachteren Ausformung der Pressmuffel 20 aus dem Muffelsystem 10 abgerundete Enden aufweisen. Die tangentialen Vorsprünge 32 nehmen dabei die Endstücke 34 einer halbkreis- oder halbovalförmigen Brücke auf, die aus keramischem Material nachgebildet werden soll, so dass sich für die Grundfläche der Pressmuffel 20 eine Art Hufeisenform oder U-Form ergibt (vgl. Fig. 3). Die Vorsprünge 32 dienen somit der Aufnahme und Formung der Endstücke 34 mit weitgehend gleichmäßiger Wandstärke in diesem Bereich, so dass sich im Querschnitt eine Art Ohrenform wie an einem Bärenkopf ergibt (vgl. auch Fig. 5).

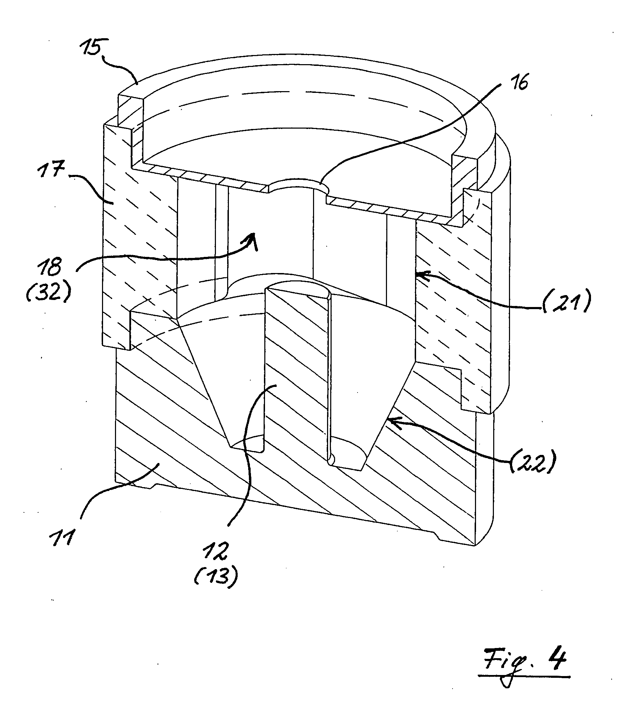

Die in Fig. 2 dargestellte Pressmuffel 20 weist in ihrem oberen Bereich eine zylindrische Form auf. Denkbar ist daneben jedoch auch, dass der zweite Hauptabschnitt 22 der Pressmuffel 20 zum oberen Ende 25 der Pressmuffel 20 hin konisch zuläuft. Durch diese konische Ausgestaltung des zweiten Hauptabschnittes 22 (vgl. Fig. 4) wird zum einen Einbettmaterial in diesem Bereich eingespart, das zur Bildung der Umfangserweiterung 18 zur Verfügung steht; zum anderen bietet die Ausgestaltung auch Vorteile beim Ausformen der Pressmuffel 20 aus dem Muffelsystem 10, da sich die Muffelbasis 11, die die Negativform dieser konischen Ausformung aufweist, besonders leicht von dieser Pressmuffel 20 abziehen lässt. Neben den genannten Vorteilen bei der Herstellung weist eine Pressmuffel 20 mit einem konisch zulaufenden zweiten Hauptabschnitt 22 auch Vorteile im Herstellungsprozess der Dentalobjekte 30 im Dentalofen auf. Aufgrund der niedrigeren Wandstärke wird das Material der Pressmuffel 20 im konischen Bereich leichter und schneller durchwärmt. Da in diesem Bereich auch der mit dem Keramikmaterial gefüllte Presskanal 13 angeordnet ist, bedarf es weniger Energieeinsatz, um das Keramikmaterial in einen fließfähigen Zustand zu überführen. Aufgrund des großen Durchmessers des Presskanals 13 können hier auch mehrere pelletförmige Keramikrohteile neben und übereinander eingebracht werden.

Um die hier gezeigte (Spezial-)Pressmuffel 20 auf Standardpresstellern in herkömmlichen Dentalöfen verwenden zu können, weist die gezeigte Pressmuffel 20 einen zusätzlichen Abschnitt 26 mit reduziertem Durchmesser auf. Hierdurch wird eine Standfläche 27 geschaffen, die in ihrem Durchmesser dem herkömmlicher Pressmuffeln entspricht. Die Standfläche 27 wird durch eine Umfangsreduzierung 19, die im Muffeldeckel 15 (vgl. Fig. 1) eingebracht ist, gebildet.

Fig. 3 zeigt die Draufsicht einer erfindungsgemäßen Pressmuffel 20. Diese Pressmuffel 20 weist in ihrer Umfangserweiterung 18 eine Abweichung von der rotationssymmetrischen Form, nämlich in Art eines Hufeisens. Die Umfangserweiterung 18 wird durch zwei Vorsprünge 32 gebildet, die etwa tangential an den ersten (unteren) Hauptabschnitt 21 der Pressmuffel 20 herangeführt sind. In diesem Bereich ist auch innerhalb der Pressmuffel 20 das herzustellende Dentalobjekt 30 angeordnet. Hier handelt es sich um einen bogenförmigen Zahnkranz, dessen Endstücke 34 in die Vorsprünge 32 an der Pressmuffel 20 hineinragen. In Fig. 3 dargestellt ist eine sog. 32er-Muffel. Mit einer unterbrochenen Linie A ist in Fig. 3 der Durchmesser der nächstgrößeren (62 mm) Muffel dargestellt, die ansonsten für den dargestellten Zahnkranz verwendet werden müsste. Aus dieser Darstellung wird ersichtlich, dass die vorgestellte Pressmuffel 20 in der Sonderform mit den Vorsprüngen 32 wesentliche Vorteile gegenüber der Verwendung herkömmlicher, zylindrischer Pressmuffeln 20 bei der Herstellung von weitspännigen oder besonders großen Dentalobjekten 30 bietet. Neben der Einsparung an Einbettmaterial weist der im Innern der Pressmuffel 20 angeordnete Zahnkranz geringere, gleichmäßigere Abstände zur Außenwand 31 der Pressmuffel 20 auf, sodass im Dentalofen eine wesentlich schnellere und gleichmäßigere Durchwärmung der Pressmuffel 20 sowie des Dentalobjektes 30 stattfindet. Gleiches gilt für die Abkühlung.

Fig. 4 zeigt im Perspektiv-Halbschnitt ein gegenüber der Fig. 1 abgewandeltes Muffelsystem 10. Zum einen ist hierbei der zweite Hauptabschnitt konisch ausgebildet, wie im Zusammenhang mit Fig. 2 angedeutet. Zudem ist hieraus die Umfangserweiterung 18 in Form einer bogenförmigen Aussparung im Mantelring 17 ersichtlich, die später einen der Vorsprünge 32 bildet. Diese Aussparung oder Auswölbung in der Mantelring 17 ist somit die Negativform für einen der Vorsprünge 32 in Fig. 3.

Fig. 5 zeigt ebenfalls den Mantelring 17 mit den hier geschwärzt dargestellten Muffeldeckel 15 und zentraler Öffnung 16. In dieser Perspektive ergibt sich durch die beiden Erweiterungen 18 (für die Vorsprünge 32) eine Form eines Bärenkopfes mit Ohren. Dies wird auch aus Fig. 6 mit einer Fotografie (Umrisskanten zur Verdeutlichung nachgezogen) einer fertigen Pressmuffel 20 deutlich, insbesondere die seitlichen Vorsprünge 32, die tangential zur Außenwand 31 herangeführt sind und im Inneren die beiden Enden der Dentalobjekts 30 aufnehmen (vgl. Draufsicht in Fig. 3) und abgerundete Enden aufweisen.

**Bezugszeichenliste:**

| | | | |
|---|---|---|---|
| | | 20 = | Pressmuffel |
| 10 = | Muffelsystem | 21 = | (erster) Hauptabschnitt |
| 11 = | Muffelbasis | 22 = | (zweiter) Hauptabschnitt |
| 12 = | Verlängerung | 25 = | (oberes) Ende |
| 13 = | Presskanal | 26 = | Abschnitt |
| 14 = | Anwachsfläche | 27 = | Standfläche |
| 15 = | Muffeldeckel | 30 = | Dentalobjekt |
| 16 = | Öffnung | 31 = | Außenwand |
| 17 = | Muffel-/Mantelring | 32 = | Vorsprung |
| 18 = | Umfangserweiterung | 34 = | Endstück |
| 19 = | Umfangsreduzierung | 35 = | Innenseite |

## Patentansprüche

1. Pressmuffel (20) für Dentalobjekte (30), insbesondere auf Keramikbasis, wobei die Pressmuffel (20) in Pressrichtung wenigstens zwei Hauptabschnitte (21, 22) umfasst und einer der Hauptabschnitte (21, 22) eine Umfangserweiterung (18) aufweist,
**dadurch gekennzeichnet, dass**
die Umfangserweiterung (18) gemäß der Form des eingebetteten Dentalobjektes (30), insbesondere mit bogenförmiger Grundform, ausgebildet ist.

2. Pressmuffel (20) nach Anspruch 1, **dadurch gekennzeichnet, dass**
die Umfangserweiterung (18) als tangential an der Pressmuffel (20) herangeführte Vorsprünge (32) ausbildet ist.

3. Pressmuffel (20) nach Anspruch 2, **dadurch gekennzeichnet, dass**
die Vorsprünge (32) abgerundete Enden aufweisen.

4. Pressmuffel (20) nach einem der vorhergehenden Ansprüche,
**dadurch gekennzeichnet, dass**
der obere Hauptabschnitt (22) bis zum oberen Ende (25) der Pressmuffel (20) konisch zulaufend ausgebildet ist.

5. Pressmuffel (20) nach einem der vorhergehenden Ansprüche,
**dadurch gekennzeichnet, dass**
die Hauptabschnitte (21, 22) jeweils als Kegelstumpf ausgebildet sind.

6. Muffelsystem (10) zur Herstellung einer Pressmuffel (20) mit wenigstens zwei Hauptabschnitten (21, 22) gemäß einem der Ansprüche 1 bis 6 umfassend:
- eine Muffelbasis (11) mit wenigstens einer Anwachsfläche (14) für ein Dentalobjekt,
- einen Muffeldeckel (15), und
- wenigstens einen zwischen der Muffelbasis (11) und dem Muffeldeckel (15) angeordneten Muffelring (17), der die Negativform einer Pressmuffel (20) mit Umfangserweiterung (18) aufweist,
**dadurch gekennzeichnet, dass**
die Negativform gemäß der Form des eingebetteten Dentalobjektes (30), insbesondere mit bogenförmiger Grundform und/oder mit tangential an der Pressmuffel (20) herangeführten Vorsprüngen (32), ausgebildet ist.

7. Muffelsystem (10) nach Anspruch 6, **dadurch gekennzeichnet, dass**
die Muffelbasis (11) die Negativform eines konisch ausgebildeten, zweiten Hauptabschnittes (22) der Pressmuffel (20) aufweist.

8. Muffelsystem nach Anspruch 6 oder 7, **dadurch gekennzeichnet, dass**
die Muffelbasis (11) und der Muffelring (17) in ihrer Verdrehlage zueinander indexiert sind, insbesondere mit einer Raste und zugehöriger Ausnehmung.

9. Muffelsystem nach einem der Ansprüche 6 bis 8, **dadurch gekennzeichnet, dass**
der Muffelring (17) an seiner Innenseite profiliert ist, insbesondere mit Längsrillen.
